# EUROPÄISCHE PATENTSCHRIFT

(11) **EP 2 236 337 B1**
(45) Veröffentlichungstag und Bekanntmachung des Hinweises auf die Patenterteilung: **07.11.2012**
(21) Anmeldenummer: 09006572.3
(22) Anmeldetag: 15.05.2009
(51) Int. Cl.: B60J 7/10, B60P 7/08

(54) **Gurtsystem**
Belt system
Système de ceinture

(30) Priorität: 02.04.2009 DE 202009004455 U
(43) Veröffentlichungstag der Anmeldung: 06.10.2010
(73) Patentinhaber: ZURRpack GmbH, Zurrgurte + Hebegurte, 89160 Dornstadt (DE)
(72) Erfinder: Gaule, Hans Günter, 89610 Oberdischingen (DE)
(74) Vertreter: Hentrich, Swen

(56) Entgegenhaltungen:
- DE-A1-102004 024 547
- DE-U1-202007 006 147
- US-A- 1 858 739
- US-A- 3 615 117
- US-A- 6 010 176

## Beschreibung

Die vorliegende Erfindung betrifft ein Gurtsystem zur Sicherung von Ladegut auf einer Ladefläche von Transporteinheiten während des Transports und insbesondere ein Gurtsystem zur Sicherung von schwerem Ladegut wie z. B. Container, Fässer oder Paletten.

Zur Sicherung von Ladegut auf einer Ladefläche von Transporteinheiten sind Zurrgurte bekannt. Ein Nachteil der herkömmlichen Sicherung von schwerem Ladegut mit separaten Zurrgurten liegt darin, dass während des Transports, insbesondere durch Bremsvorgänge bei einer leichter ausgeführten Verzurrung zur Schonung des Ladeguts ein Verrutschen der separaten Zurrgurte auftreten kann, so dass bei den herkömmlichen separaten Zurrgurten aus Sicherheitsgründen eine besonders kräftig ausgeführte Verzurrung unvermeidlich ist.

Die DE 20 2007 006 147 U1 und DE 10200402547 Zeigen eine Zugmittelanordnung zur Sicherung von Ladegut auf einer Ladefläche eines Transportmittels. Hierbei sind mehrere Gurte netzartig fest miteinander verbunden, welche Behälter im Bereich deren oberen Drittels zusammenhalten. Durch Verspannung dieses Netzes mit Sicherungsgurten, die an der Ladefläche befestigt werden, sollen damit insbesondere Behälter gesichert werden, die Schüttgut aufnehmen und dadurch leicht kippen können. Mit dieser Zugmittelanordnung ist allerdings der Nachteil verbunden, dass es die wirkenden Trägheitskräfte, wie sie beim Brems- und Beschleunigungsvorgang auftreten, nur punktuell oder linienartig aufnehmen kann. Die Gurte können sich daher in das Transportgut schneiden. Auch ist es sehr aufwändig diese Zugmittelanordnung sachgerecht zu lagern, da sich ihre Gurte sehr leicht ineinander verhaken und verknoten. Auch beim wieder Einsetzen der Zugmittelanordnung ist zunächst das entstandene Knäuel zu entwirren, was kostbare Zeit und Nerven kostet.

Der Erfindung liegt daher die Aufgabe zugrunde, ein Gurtsystem zur Sicherung von Ladegut auf einer Ladefläche von Transporteinheiten während des Transports, insbesondere von Transportfahrzeugen ohne feste Seitenwände, zur Verfügung zu stellen, das eine verbesserte Sicherung des Ladegutes gegen Trägheitskräfte und eine Vereinfachung der Handhabung für den Nutzer bereitstellt.

Bei einem Gurtsystem zur Sicherung von Ladegut auf einer Ladefläche mit einer Anzahl an Sicherungsgurten und Befestigungsmitteln zur lösbaren Befestigung der Sicherungsgurte an einer Ladefläche, mit einem zusätzlichen Umreifungsgurt mit einer Straffvorrichtung, und mit mit den Sicherungsgurten und mit dem zusätzlichen Umreifungsgurt jeweils mindestens eine feste Verbindung aufweisenden Verstärkungsgurten wird diese Aufgabe dadurch gekennzeichnet, dass eine Plane vorgesehen ist, und dass die Plane entlang ihren Längsseiten fest mit den Verstärkungsgurten verbunden ist. Diese Ausgestaltung mit den Verstärkungsgurten und den festen Verbindungen der Verstärkungsgurte mit den Sicherungsgurten weist den Vorteil auf, dass sowohl ein Verrutschen der Sicherungsgurte erschwert werden kann als auch die Krafteinwirkungen auf das Ladegut verbessert werden können. Ein weiterer Vorteil liegt darin, dass bei diesem Gurtsystem keine losen bzw. unverbundenen Einzelteile vorliegen, die verloren gehen könnten.

Als vorteilhaft hat es sich erwiesen, wenn die Plane bandartig ausgestaltet ist und wenn an beiden Längsseiten der bandartigen Plane jeweils einer der Verstärkungsgurte angebracht ist, wodurch die Sicherung des Ladeguts entlang der Hauptbelastungsrichtung, insbesondere bei Bremsvorgängen, verstärkt wird. Weiterhin kann bei dem Gurtsystem in einem mittleren Bereich der bandartigen Plane mindestens einer der Verstärkungsgurte quer zur Längsrichtung der Plane angebracht sein, wodurch die Führung und Positionierung des Umreifungsgurtes verbessert werden kann. Als besonders günstig hat es erwiesen, wenn die Verbindungen des zusätzlichen Umreifungsgurtes mit den Verstärkungsgurten derart angeordnet sind, dass im gesicherten Zustand der Umreifungsgurt im oberen Drittel um das Ladegut umläuft, wodurch die Stabilität der Sicherung des Ladegutes verbessert werden kann.

Bei einem bevorzugten Ausführungsbeispiel des Gurtsystems beträgt die Anzahl der Sicherungsgurte mindestens drei, wobei mindestens zwei Sicherungsgurte an den Verstärkungsgurten in Vorwärtsrichtung angebracht sind und mindestens ein Sicherungsgurt an den Verstärkungsgurten in Rückwärtsrichtung angebracht ist, wodurch die maximal zu erwartenden Kräfte materialsparend berücksichtigt werden können.

Weiterhin hat es sich als vorteilhaft erweisen, wenn die an den Verstärkungsgurten in Vorwärtsrichtung angebrachten Sicherungsgurte zur Umfassung um eine Ecke eines vorderen Ladegutes ausgestaltet sind und wenn der an den Verstärkungsgurten in Rückwärtsrichtung angebrachte Sicherungsgurt zur Umfassung um eine Ecke eines hinteren Ladegutes ausgestaltet ist, wodurch die Sicherung des Ladegutes gegen Seitenkräfte erhöht werden kann.

Zusätzlich können die Verstärkungsgurte, die in Vorwärtsrichtung angeordneten Sicherungsgurte, der in Rückwärtsrichtung angeordnete Sicherungsgurt und der Umreifungsgurt mittels Codierungen, insbesondere mittels farblicher Codierungen unterscheidbar ausgestaltet sind. Auf diese Weise werden die Arbeiten zur Verzurrung für den Benutzer sowohl vereinfacht als auch beschleunigt und können Fehlbedienungen vermieden werden.

Des Weiteren können bei dem erfindungsgemäßen Gurtsystem die Befestigungsmittel Ratschen umfassen, wodurch ein besonders effektives Verzurren ermöglicht wird.

Als besonders vorteilhaft hat es sich erwiesen, wenn die Plane ein Klettband in einer derartigen Anordnung aufweist, dass in einem Lagerungszustand des Gurtsystems die Sicherungsgurte und der zusätzliche Umreifungsgurt von der Plane umschlossen und gesichert werden können. Diese Ausgestaltung weist den Vorteil auf, dass auch Verpackungsmaterial für das Gurtsystem eingespart werden kann.

Darüber hinaus ist es günstig, wenn die Plane zusätzliche Aufhänggurte aufweist, um das Gurtsystem in dem Lagerungszustand an Aufhängern aufzuhängen. Dadurch kann das Gurtsystem z. B. bei Leerfahren der Transportfahrzeuge platzsparend und sicher verstaut werden.

Weiterhin können bei dem Gurtsystem an den Verstärkungsgurten Sicherungsmittel angeordnet sein, um lösbare Verbindungen mit an dem Ladegut angebrachten Sicherungsmittelaufnahmeelementen zu bilden. Auf diese Weise kann die Sicherung des Ladeguts verstärkt werden. In diesen Zusammenhang hat es sich als besonders vorteilhaft erwiesen, wenn die Sicherungsmittel als Haken, insbesondere als Karabinerhaken ausgestaltet sind und / oder wenn die Sicherungsmittelaufnahmeelemente als D-Ringe ausgestaltet sind. Als besonders günstig hat es sich erwiesen, wenn die Kraftübertragung über die äußeren Gurte erfolgt und die Haken an dem vorderen Gurt angeordnet sind.

Im Folgenden wird die Erfindung an in der Zeichnung dargestellten Ausführungsbeispielen näher erläutert; es zeigen:
- Fig. 1: eine Explosionsdarstellung eines Gurtsystems zur Sicherung von Ladegut in einem Arbeitszustand nach einem ersten Ausführungsbeispiel und
- Fig. 2: eine Explosionsdarstellung eines Gurtsystems zur Sicherung von Ladegut in einem Arbeitszustand nach einem zweiten Ausführungsbeispiel.

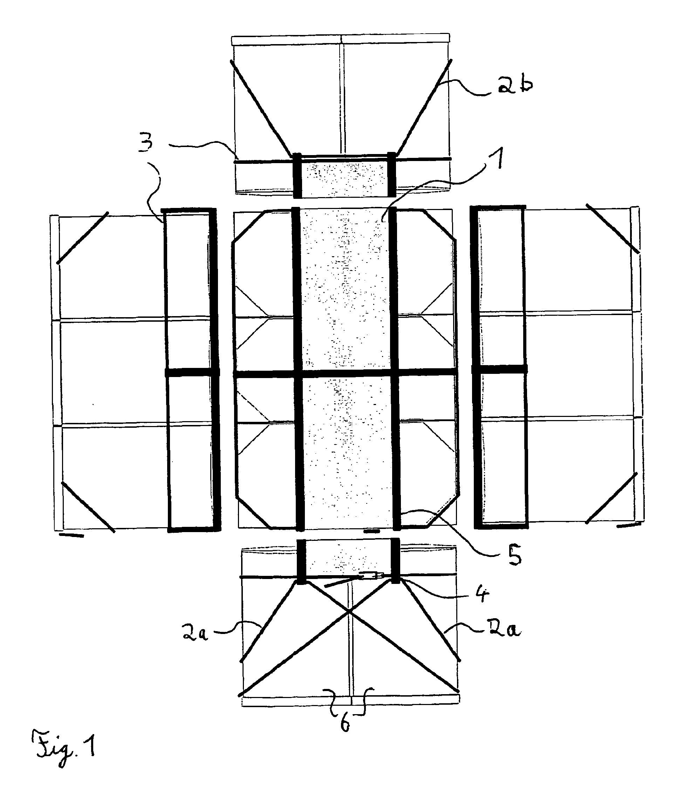

Fig. 1 zeigt eine Explosionsdarstellung eines erfindungsgemäßen Gurtsystems zur Sicherung von Ladegut 6 nach einem zweiten Ausführungsbeispiel, wobei das Ladegut 6 nach dem in der Zeichnung gezeigten Ausführungsbeispiel sechs Behälter umfasst. Die Plane 1 kann teilweise die obere Oberfläche der Behälter und teilweise die Vorderfläche der vorderen Behälter bzw. die Rückfläche der hinteren Behälter bedecken. Entlang den Längsseiten der Plane 1 sind Verstärkungsgurte 5 fest angebracht. Weiterhin ist quer zur Längsrichtung der bandartigen Plane 1 ein weiterer Verstärkungsgurt 5 angebracht. An den Endbereichen der Verstärkungsgurte 5 ist der zusätzliche Umreifungsgurt 3 angebracht, der mittels der Straffvorrichtung 4 festgezogen werden kann.

Den Seitenansichten aus der Fig. 1 kann entnommen werden, dass der Umreifungsgurt 3 im oberen Drittel um das Ladegut 6 umlaufend angeordnet ist. Weiterhin können zwei vordere Sicherungsgurte 2a an der unter Bezug auf die Transportrichtung vorderen Seite des Ladegutes 6 an den Endbereichen der Verstärkungsgurte angebracht sein und es kann ein hinterer Sicherungsgurt 2b an der unter Bezug auf die Transportrichtung hinteren Seite des Ladegutes 6 an den Endbereichen der Verstärkungsgurte angebracht sein, wobei bei dem in der Fig. 1 gezeigten Ausführungsbeispiel die Sicherungsgurte 2a, 2b um entsprechende Eckbereiche des Ladegutes 6 umgreifend ausgestaltet sind.

Weiterhin kann die Plane 1 ein Klettband aufweisen, so dass bei einem Abbau des Gurtsystems die Sicherungsgurte 2a, 2b und der Umreifungsgurt 3 auf die Plane 1 aufgebracht werden und zur Lagerung in der Plane 1 verborgen werden können, so dass die Plane 1 als Verpackung des Gurtsystem im Lagerungszustand dient. Weiterhin kann die Plane 1 in der Zeichnung nicht dargestellte Aufhänggurte aufweisen, um das derart verpackte Gurtsystem platzsparend an z. B. entsprechenden Haken in Transportfahrzeugen aufzuhängen.

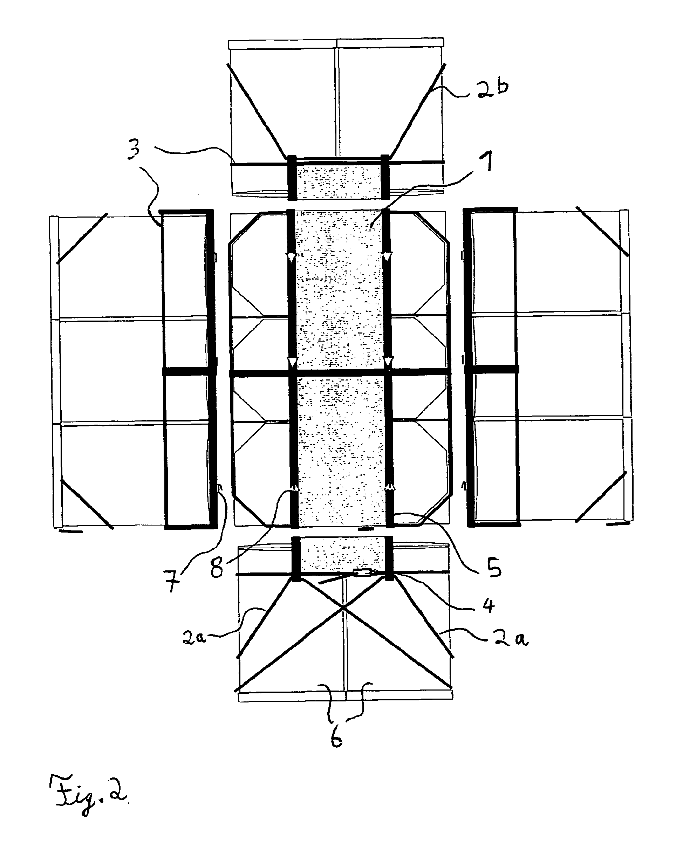

Fig. 2 zeigt eine Explosionsdarstellung eines zweiten Ausführungsbeispiels eines Gurtsystems zur Sicherung von Ladegut 6. An den Verstärkungsgurten 5 sind Sicherungsmittel 7 angebracht, die lösbaren Verbindungen mit an dem Ladegut 6 angebrachten Sicherungsmittelaufnahmeelementen 8 bilden können. Die Sicherungsmittel 7 können z. B. als Haken, insbesondere Karabinerhaken und die Sicherungsmittelaufnahmeelemente können als D-Ringe ausgestaltet sein.

Das erfindungsgemäße Gurtsystem ist nicht auf die Sicherung eines Ladeguts mit genau sechs Behältern beschränkt, sondern die Anzahl der Behälter kann nach Belieben ausgewählt werden, wobei sich auch eine Anordnung mit zwei, vier oder acht Behältern als besonders vorteilhaft erwiesen hat.

Bezugszeichenliste
- 1: Plane
- 2a, 2b: Sicherungsgurt
- 3: Umreifungsgurt
- 4: Straffvorrichtung
- 5: Verstärkungsgurt
- 6: Ladegut
- 7: Haken
- 8: D-Ring

## Patentansprüche

1. Gurtsystem zur Sicherung von Ladegut auf einer Ladefläche mit einer Anzahl an Sicherungsgurten (2a, 2b) und Befestigungsmitteln zur lösbaren Befestigung der Sicherungsgurte (2a, 2b) an einer Ladefläche, mit einem zusätzlichen Umreifungsgurt (3) mit einer Straffvorrichtung (4), und mit mit den Sicherungsgurten (2a, 2b) und mit dem zusätzlichen Umreifungsgurt (3) jeweils mindestens eine feste Verbindung aufweisenden Verstärkungsgurten (5), **dadurch gekennzeichnet, dass** eine Plane (1) vorgesehen, und dass die Plane (1) entlang ihren Längsseiten fest mit den Verstärkungsgurten (5) verbunden ist.

2. Gurtsystem nach Anspruch 1, **dadurch gekennzeichnet, dass** die Plane (1) bandartig ausgestaltet ist und dass mindestens an beiden Längsseiten der bandartigen Plane (1) jeweils einer der Verstärkungsgurte (5) angebracht ist.

3. Gurtsystem nach Anspruch 2, **dadurch gekennzeichnet, dass** in einem mittleren Bereich der bandartigen Plane (1) mindestens einer der Verstärkungsgurte (5) quer zur Längsrichtung der Plane (1) angebracht ist.

4. Gurtsystem nach einem der vorgehenden Ansprüche, **dadurch gekennzeichnet, dass** die Verbindungen des zusätzlichen Umreifungsgurtes (3) mit den Verstärkungsgurten (5) derart angeordnet sind, dass im gesicherten Zustand der Umreifungsgurt (3) im oberen Drittel um das Ladegut (6) umläuft.

5. Gurtsystem nach einem der vorgehenden Ansprüche, **dadurch gekennzeichnet, dass** die Anzahl der Sicherungsgurte (2a, 2b) mindestens drei beträgt und dass mindestens zwei Sicherungsgurte (2a) an den Verstärkungsgurten (5) in Vorwärtsrichtung und mindestens ein Sicherungsgurt (2b) an den Verstärkungsgurten (5) in Rückwärtsrichtung angebracht ist.

6. Gurtsystem nach Anspruch 5, **dadurch gekennzeichnet, dass** die an den Verstärkungsgurten (5) in Vorwärtsrichtung angebrachten Sicherungsgurte (2a) zur Umfassung um einen Eckbereich eines vorderen Ladegutes ausgestaltet sind und dass der an den Verstärkungsgurten (5) in Rückwärtsrichtung angebrachte Sicherungsgurt (2b) zur Umfassung um einen Eckbereich eines hinteren Ladegutes ausgestaltet ist.

7. Gurtsystem nach Anspruch 5 oder 6, **dadurch gekennzeichnet, dass** die Verstärkungsgurte (5), die in Vorwärtsrichtung angeordneten Sicherungsgurte (2a), der in Rückwärtsrichtung angeordnete Sicherungsgurt (2b) und der Umreifungsgurt (3) mittels Codierungen, insbesondere mittels farblicher Codierungen unterscheidbar ausgestaltet sind.

8. Gurtsystem nach einem der vorgehenden Ansprüche, **dadurch gekennzeichnet, dass** die Befestigungsmittel Ratschen umfassen.

9. Gurtsystem nach einem der vorgehenden Ansprüche, **dadurch gekennzeichnet, dass** die Plane (1) ein Klettband in einer derartigen Anordnung aufweist, dass in einem Lagerungszustand des Gurtsystems die Sicherungsgurte (2a, 2b) und der zusätzliche Umreifungsgurt (3) von der Plane (1) umschlossen und gesichert werden können.

10. Gurtsystem nach Anspruch 9, **dadurch gekennzeichnet, dass** die Plane (1) zusätzliche Aufhänggurte aufweist, um das Gurtsystem in dem Lagerungszustand an Aufhängern aufzuhängen.

11. Gurtsystem nach einem der vorgehenden Ansprüche, **dadurch gekennzeichnet, dass** an den Verstärkungsgurten (5) Sicherungsmittel (7) zu einer lösbaren Verbindung mit an dem Ladegut (6) angebrachten Sicherungsmittelaufnahmeelementen (8) angeordnet sind.

12. Gurtsystem nach Anspruch 11, **dadurch gekennzeichnet, dass** die Sicherungsmittel als Haken (7), insbesondere als Karabinerhaken ausgestaltet sind.

13. Gurtsystem nach Anspruch 11 oder 12, **dadurch gekennzeichnet, dass** die Sicherungsmittelaufnahmeelemente (8) als D-Ringe ausgestaltet sind.

## Claims

1. Belt system for securing a load on a loading surface with a number of securing straps (2a, 2b) and fastening means for detachable fastening of the securing straps (2a, 2b) on a loading surface, with an additional strapping belt (3) with a tensioning device (4) and reinforcing belts (5) having at least one permanent connection to the securing straps (2a, 2b) as well as the additional strapping belt (3), **characterised In that** a tarpaulin (1) is provided and that the tarpaulin (1) is permanently connected along its longitudinal sides with the reinforcing belts (5).

2. Belt system according to claim 1, **characterised in that** the tarpaulin (1) is in the form of a strip and that one of the reinforcing belts (5) is attached on at least the two longitudinal sides of the strip-like tarpaulin (1).

3. Belt system according to claim 2, **characterised in that** In a central area of the strip-like tarpaulin (1) at least one of the reinforcing belts (5) is attached transverse to the longitudinal axis of the tarpaulin (1).

4. Belt system according to one of the preceding claims, **characterised in that** the connections of the additional strapping belt (3) to the reinforcing belts (5) are arranged in such a way that when the strapping belt (3) is in the secured state it runs around the upper third of the load (6).

5. Belt system according to one of the preceding claims, **characterised in that** the number of securing straps (2a, 2b) is at least three and that at least two securing straps (2a) are attached to the reinforcing belts (5) in the forward direction and at least one securing strap (2b) is attached to the reinforcing belts (5) in the rearward direction.

6. Belt system according to claim 5, **characterised In that** the securing straps (2a) attached to the reinforcing belts (5) in the forward direction are designed to encompass a corner area of a front load and that the securing strap (2b) attached to the reinforcing belts (5) in the rearward direction is designed to encompass a corner area of a rear load.

7. Belt system according to claim 5 or 6, **characterised in that** the reinforcing belts (5), the arranged securing straps (2a) arranged in the forward direction, the securing straps (2b) arranged in the rearward direction and the strapping belt (3) are designed to be distinguishable by means of codings, in particular by means of coloured codings.

8. Belt system according to one of the preceding claims **characterised in that** the fastening means include ratchets.

9. Belt system according to one of the preceding claims, **characterised in that** the tarpaulin (1) has a strip of Velcro in such an arrangement that when the belt system is in storage condition the securing straps (2a, 2b) and the additional strapping belt (3) can be endorsed and secured by the tarpaulin (1).

10. Belt system according to claim 9, **characterised in that** the tarpaulin (1) has additional suspension belts, in order to hang up the belt system in the storage condition on hangers.

11. Belt system according to one of the preceding clams, **characterised in that** securing means (7) are arranged on the reinforcing belts (5) to form a detachable connection with elements (8) attached to the load (6) to receive securing means.

12. Belt system according to claim 11, **characterised in that** the securing means are in the form of hooks (7), in particular of carabiner hooks.

13. Belt system according to claim 11 or 12, **characterised in that** the elements (8) to receive securing means are in the form of D-rings.

## Revendications

1. Système de sangles destiné à l'arrimage de marchandises sur une surface de chargement, comprenant un certain nombre de sangles d'arrimage (2a, 2b) et des moyens de fixation pour la fixation amovible des sangles d'arrimage (2a, 2b) à une surface de chargement, comprenant en outre une sangle de cerclage (3) dotée d'un dispositif tendeur (4), et comprenant des sangles de renfort (5) présentant respectivement au moins une liaison fixe avec les sangles d'arrimage (2a, 2b) et avec la sangle de cerclage (3) supplémentaire, **caractérisé en ce qu'**il est prévu une bâche (1) et **en ce que** la bâche (1) est liée solidement aux sangles de renfort (5), le long de ses côtés longitudinaux.

2. Système de sangles selon la revendication 1, **caractérisé en ce que** la bâche (1) est réalisée à la manière d'une bande, et **en ce que** l'une des sangles de renfort (5) est fixée respectivement au moins aux deux côtés longitudinaux de la bâche (1) en forme de bande.

3. Système de sangles selon la revendication 2, **caractérisé en ce que** dans une zone centrale de la bâche (1) en forme de bande, au moins une des sangles de renfort (5) est fixée perpendiculairement au sens longitudinal de la bâche (1).

4. Système de sangles selon une des revendications précédentes, **caractérisé en ce que** les liaisons de la sangle de cerclage (3) supplémentaire avec les sangles de renfort (5) sont disposées de manière telle qu'à l'état arrimé, la sangle de cerclage (3) entoure les marchandises (6) dans le tiers supérieur.

5. Système de sangles selon une des revendications précédentes, **caractérisé en ce que** le nombre de sangles d'arrimage (2a, 2b) est au moins égal à trois, et **en ce qu'**au moins deux sangles d'arrimage (2a) sont fixées aux sangles de renfort (5) dans le sens avant et au moins une sangle d'arrimage (2b) est fixée aux sangles de renfort (5) dans le sens arrière.

6. Système de sangles selon la revendication 5, **caractérisé en ce que** les sangles d'arrimage (2a) fixées aux sangles de renfort (5) dans le sens avant sont conçues pour entourer une zone d'angle de marchandises situées à l'avant, et **en ce que** la sangle d'arrimage (2b) fixée aux sangles de renfort (5) dans le sens arrière est conçue pour entourer une zone d'angle de marchandises situées à l'arrière.

7. Système de sangles selon la revendication 5 ou 6, **caractérisé en ce que** les sangles de renfort (5), les sangles d'arrimage (2a) disposées dans le sens avant, la sangle d'arrimage (2b) disposée dans le sens arrière et la sangle de cerclage (3) sont réalisées de manière à pouvoir être distinguées par des codes, notamment des codes couleur.

8. Système de sangles selon une des revendications précédentes, **caractérisé en ce que** les moyens de fixation comportent des rochets.

9. Système de sangles selon une des revendications précédentes, **caractérisé en ce que** la bâche (1) présente un ruban auto-agrippant dans une disposition telle qu'à l'état de stockage du système de sangles, les sangles d'arrimage (2a, 2b) et la sangle de cerclage (3) supplémentaire peuvent être entourées et maintenues par la bâche (1).

10. Système de sangles selon la revendication 9, **caractérisé en ce que** la bâche (1) présente en outre des sangles de suspension, afin de suspendre le système de sangles sur des éléments de suspension, lorsqu'il est stocké.

11. Système de sangles selon une des revendications précédentes, **caractérisé en ce que** les sangles de renfort (5) comportent des moyens d'arrimage (7) destinés à établir une liaison libérable avec des éléments de réception de moyens d'arrimage (8) fixés aux marchandises (6).

12. Système de sangles selon la revendication 11, **caractérisé en ce que** les moyens d'arrimage sont réalisés sous forme de crochets (7), en particulier sous forme de mousquetons.

13. Système de sangles selon la revendication 11 ou 12, **caractérisé en ce que** les éléments de réception de moyens d'arrimage (8) sont réalisés sous forme d'anneaux en D.
